# EUROPEAN PATENT SPECIFICATION

(11) **EP 1 286 094 B1**
(45) Date of publication and mention of the grant of the patent: **21.09.2005**
(21) Application number: 01500183.7
(22) Date of filing: 13.07.2001
(51) Int. Cl.: F16L 3/23

(54) **Adjustable support for securing cable bundles and similar**
Verstellbare Stütze zur Befestigung von Kabelbündeln und dergleichen
Support ajustable pour fixer des faisceaux de câbles ou similaires

(43) Date of publication of application: 26.02.2003
(73) Proprietor: I.T.W. Espana, S.A., 08520 Les Franqueses Del Valles (Barcelona) (ES)
(72) Inventor: Parés, Albert, 08520 Les Franqueses delValles Barcelona (ES)
(74) Representative: Carpintero Lopez, Francisco

(56) References cited:
- DE-U- 29 510 148
- US-A- 5 012 995

## Description

### OBJECT OF THE INVENTION

The present invention relates to a support which has been specially designed for the securing of cable bundles, but which can be likewise employed for securing any other similar element, like for example a flexible pipe, support which has as a special particularity its adjustable nature, in such a manner that once secured to the cable bundle, it permits a certain adjustment in position when joining said bundle to the static predetermined point for this purpose.

The support proves to be of special application in the motor vehicle industry, for the securing of cable bundles pertaining to the electrical fittings, to the bodywork of said motor vehicles, and also for the securing of other pipes and ducts.

### BACKGROUND OF THE INVENTION

Within the preferred scope of practical application of the invention, for example that of securing a cable bundle to the bodywork of a vehicle, use is generally made of bands dimensionally suited to the bundle in question, to which bands is joined a clip of plastic material, capable of being fitted in dovetail manner and by pressure in a hole of the sheet metal and finished in a pad which serves as an elastic seating of said clip on the sheet metal, in order to cater for sheet metal of different thickness, and which optionally can be assisted by an elastomeric gasket, in order to provide the anchoring hole with adequate water-tightness.

In this sense mention can be made of the European Patent application EP-A-0 709 609 in which is described a plastic securing device for pipes, conducting cables and similar, which includes a clamping band in relation with a support which on one part includes a peg for fixing in a hole of the assembly element, and on the opposite side has a double seating in channel configuration, transversal to the clamping band, for positioning the pipe it is intended to support.

Likewise, mention can be made of the European Patent Application EP-A-0863350, referring also to a device for retaining a pipe or cable bundle, with a peg for fixing in a hole of an element, and an elongated body in which the pipe rests, said pipe being retained by means of wrapping tape or similar.

In all cases the solutions which are described in the aforementioned documents present in practice certain difficulties from the point of view of installation, arising from the clamp being secured to the cable bundle at a precise and unmoveable point of the latter, in the same manner as the fixing hole previously executed in the sheet metal is also unmoveable, whereby should the clamp not have been mounted at the precise location on the cable bundle, the securing of the clip in the hole of the sheet metal proves very difficult, when not impossible, obligating the removal of the clamp and its replacement by another in the correct spot.

US-A-5012995 discloses a device substantially in accordance with the preamble of claim 1 of the present patent. A similar type of device is disclosed in DE-29510148-U.

### DESCRIPTION OF THE INVENTION

The adjustable support proposed in claim 1 overcomes in an entirely satisfactory manner the problems explained above, in such a manner that once the cable bundles are definitively fastened to the support, there exists a significant capacity for positional adjustment between the support itself and the clip which forms part thereof, in order that said clip is positioned in all cases exactly opposite the hole in which it is inserted.

To this end and more specifically the support itself is implemented in a kind of strip, considerably elongated, intended to hold at its extremities the cable bundle or element in question, by taping, leaving free an extensive intermediate sector of said strip wherein is constituted a longitudinal slot or channel along which a pillar bearing said clip can be displaced, such that once the cable bundle is secured or taped to the extremities of the strip, the pillar bearing the clip can be displaced longitudinally over the length of the strip in order to adopt in each case the most appropriate position for its clip to be located perfectly opposite the hole in the sheet metal in which it has to be inserted.

In accordance with the invention provision is made for said strip to have a series of nipples in longitudinal alignment on both sides of its longitudinal slot or channel, which establish or define a starting or "zero" position in which the pillar is centred with respect to the longitudinal slot, said nipples being afterwards displaced with respect to the pillar mentioned once the adjustment of said pillar's position has been made with respect to the clip, thanks to the displacement of said pillar over the full length of the longitudinal slot.

### DESCRIPTION OF THE DRAWINGS

To complete the description in process and in order to assist in a better understanding of the characteristics of the invention, in accordance with a preferred example of practical embodiment thereof, and as an integral part of said description, a set of drawings is attached in which by way of illustration and not restrictively, the following is shown:
Figure 1.- Shows a side elevation of an adjustable support for securing cable bundles and similar, implemented in accordance with the object of the present invention.
Figure 2.- Shows a profile of the support of the previous figure.

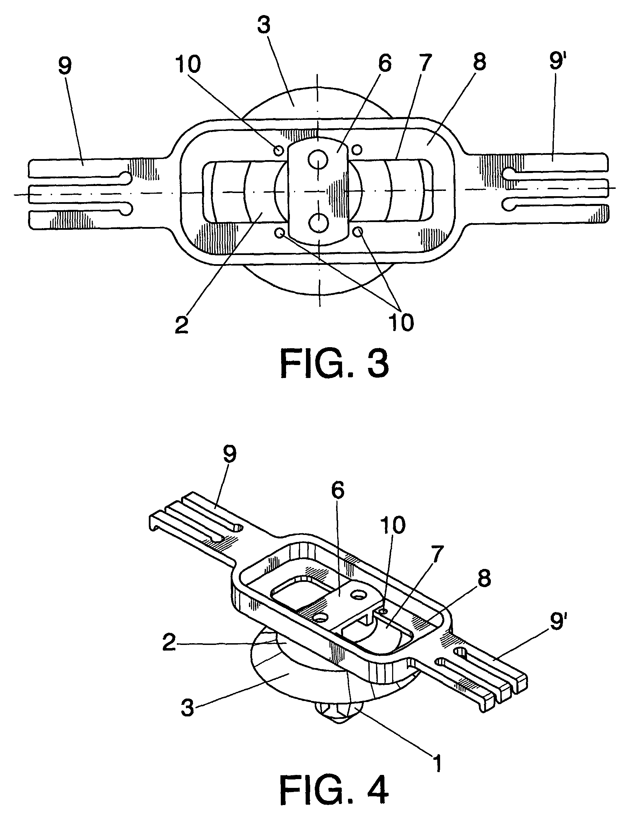

Figure 3.- Shows a plan view of the same support.
Figure 4.- Shows, finally, a detail in perspective of the support of the previous figures.

### PREFERRED EMBODIMENT OF THE INVENTION

In the light of the aforesaid figures it can be seen how the adjustable support proposed by the invention is constituted by a clip (1), in itself conventional, which is approximately barrel-shaped in form, in such a manner that in its axial coupling to the hole of an adequate retaining element, like for example a hole in the sheet metal constituting the bodywork of a vehicle, a radial contraction occurs in its median zone until said hole is surpassed, after which its elastic recovery takes place and consequent securing to the sheet metal mentioned, which is perfectly stabilised with the collaboration of a pad (2), optionally provided at the level of its opening with a water-tight gasket (3), which is deformed on the face corresponding to the sheet metal in order to seal the securing hole made therein, clip to which in any case and as is also conventional, shall be joined the cable bundle (4), pipe or element to be secured in question.

Thus, now in accordance with the invention the clip (1) is finished axially, at its extremity opposite to that of coupling or securing to the sheet metal (5), in a pillar (6) which traverses a longitudinal slot or channel (7) operationally established in a support (8), considerably elongated, each extremity of which is finished in an arm (9-9'), in alignment, to which is attached the cable bundle (4), for example by taping.

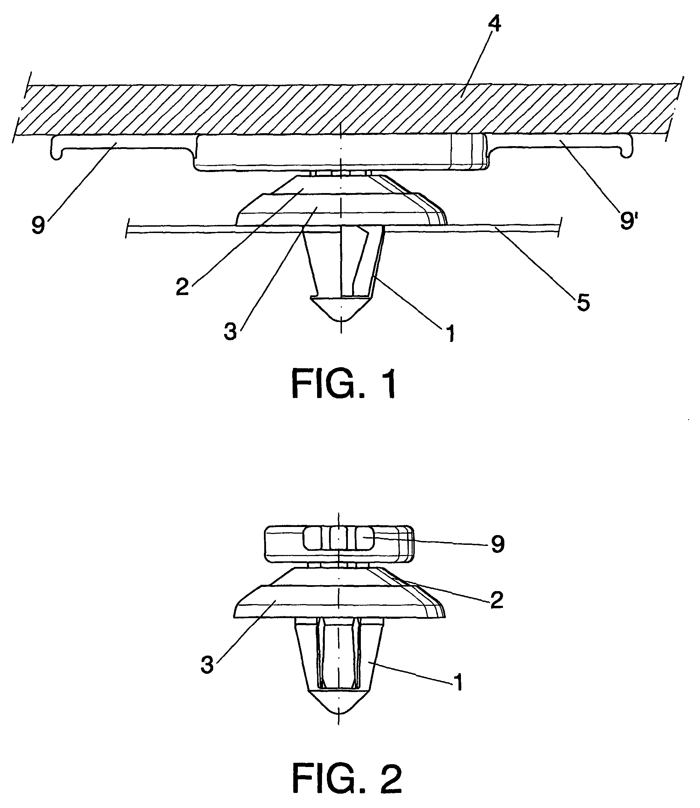

This special configuration permits that, once the support as a whole has been secured by means of taping to the cable bundle (4), at the level of its outer arms (9-9'), and from the centring location for the pillar (6) shown in figure 1, the clip (1) maintains this centre position if therein it is facing the hole in the sheet metal (5), or else it can be displaced longitudinally to the right or to the left, in the event of this not being the case, in order to reach such position of the clip (1) being axially opposite the hole in the sheet metal (5).

Thus, the starting or initial or "zero" setting of the pillar (6) is that which locates it centrally with respect to some nipples (10), which form alignments on both sides of the longitudinal slot or channel (7), it being possible thereafter for said pillar (6) to adopt, once the adjustment of the position of said pillar (6) has been carried out thanks to the displacement thereof along the longitudinal slot (7), any position over the entire length of said longitudinal slot or channel (7).

## Claims

1. Adjustable support for securing an element (4) such as a cable bundle, especially for securing such an element to a bodywork of a vehicle, said support comprising:
a clip (1) of plastic material, capable of being press-fitted by elastic deformation in a hole in sheet metal (5), up to a limiting situation in which a pad (2) rests on said sheet metal (5), with or without the interposition of a water-tight gasket (3);
two outer arms (9, 9'), to which said element (4), such as a cable bundle, can be secured;
wherein a pillar (6) is axially joined to said clip (1), said pillar (6) being transversally displaceable in a longitudinal slot or channel (7), of notable length, established in an extensive intermediate sector of the support (8), in such a manner that once said element (4) is fastened to the support (8), the relative position between the element (4) and the clip (1) can be varied over the length of the slot or channel (7);
**characterised in that** the support (8) is further provided with a plurality of nipples (10) arranged next to the rims of the slot or channel (7), said nipples (10) being arranged to define an initial position of the pillar (6), in which said pillar (6) is centred with respect to said slot or channel (7).

## Patentansprüche

1. Verstellbarer Träger zum Befestigen eines Elementes (4), wie beispielsweise eines Kabelbündels, insbesondere zum Befestigen eines derartigen Elementes an einer Karosserie eines Fahrzeugs, wobei der Träger umfasst:
eine Klemme (1) aus Kunststoffmaterial, die durch elastische Verformung in ein Loch in Blech (5) bis an eine begrenzende Position pressgepasst werden kann, in der eine Auflage (2) an dem Blech (5) mit dazwischen befindlicher wasserundurchlässiger Dichtung (3) oder ohne diese anliegt;
zwei äußere Arme (9, 9'), an denen das Element (4), wie beispielsweise ein Kabelbündel, befestigt werden kann;
wobei eine Stütze (6) axial mit der Klemme (1) verbunden ist und die Stütze (6) in einem Längsschlitz oder -kanal (7) von erheblicher Länge, der in einem ausgedehnten Mittelabschnitt des Trägers (8) ausgebildet ist, quer so verschoben werden kann, dass, wenn das Element (4) an dem Träger (8) befestigt ist, die relative Position zwischen dem Element (4) und der Klemme (1) über die Länge des Schlitzes bzw. Kanals (7) verändert werden kann;
**dadurch gekennzeichnet, dass** der Träger (8) des Weiteren mit einer Vielzahl von Vorsprüngen (10) versehen ist, die an den Rändern des Schlitzes bzw. Kanals (7) angeordnet sind, wobei die Vorsprünge (10) so angeordnet sind, dass sie eine Ausgangsposition der Stütze (6) bestimmen, in der die Stütze (6) in Bezug auf den Schlitz bzw. Kanal (7) zentriert ist.

## Revendications

1. Support réglable destiné à fixer un élément (4) tel qu'un faisceau de câbles, en particulier pour fixer cet élément à la carrosserie d'un véhicule, ce support comprenant :
- une pince (1) en matière plastique pouvant être emboîtée à la presse, par déformation élastique, dans un trou d'une feuille de métal (5), jusqu'à une position limite dans laquelle un tampon (2) vient s'appuyer sur la feuille de métal (5), avec ou sans interposition d'un joint d'étanchéité à l'eau (3),
- deux bras extérieurs (9, 9') auxquels peut se fixer l'élément (4) tel qu'un faisceau de câbles,
- un pilier (6) se reliant axialement à la pince (1), ce pilier (6) pouvant se déplacer transversalement dans une fente ou canal longitudinal (7), de longueur notable, formé dans un secteur intermédiaire étendu du support (8), de telle manière qu'une fois l'élément (4) fixé au support (8), on puisse faire varier la position relative entre l'élément (4) et la pince (1) sur toute la longueur de la fente ou canal (7),
**caractérisé en ce que**
le support (8) est en outre muni d'un certain nombre de tétons (10) disposés tout près des bords de la fente ou canal (7), ces tétons (10) étant disposés pour définir une position initiale du pilier (6) dans laquelle ce pilier (6) est centré par rapport à la fente ou canal (7).
